# FASCICULE DE BREVET EUROPEEN

(11) **EP 4 101 086 B1**
(45) Date de publication et mention de la délivrance du brevet: **03.09.2025**
(21) Numéro de dépôt: 21714656.2
(22) Date de dépôt: 05.03.2021
(51) Int. Cl.: H04B 7/185, H04B 7/204

(54) **DISPOSITIF ET SYSTÈME DE RÉCEPTION DE MESSAGES ADS-B PAR UN SATELLITE EN ORBITE DÉFILANTE**
VORRICHTUNG UND SYSTEM FÜR DEN EMPFANG VON ADS-B-NACHRICHTEN DURCH EINEN UMLAUFENDEN SATELLITEN
DEVICE AND SYSTEM FOR THE RECEPTION OF ADS-B MESSAGES BY AN ORBITING SATELLITE

(30) Priorité: 05.03.2020 FR 2002229
(43) Date de publication de la demande: 14.12.2022
(73) Titulaire: Airbus Defence and Space SAS, 31402 Toulouse Cedex 4 (FR)
(72) Inventeur: KERMEL, Frédéric, 31402 Toulouse Cedex 4 (FR); LUQUE RIBAS, Sergi, 31402 Toulouse Cedex 4 (FR)
(74) Mandataire: Plasseraud IP
(86) Numéro de dépôt international: PCT/FR2021/050376
(87) Numéro de publication internationale: WO 2021/176186

(56) Documents cités:
- EP-A2- 2 590 341
- CN-A- 108 418 610
- US-A1- 2016 087 714
- US-A1- 2018 269 958
- YU SUNQUAN ET AL: "Integrated antenna and receiver system with self-calibrating digital beamforming for space-based ADS-B", ACTA ASTRONAUTICA, PERGAMON PRESS, ELMSFORD, GB, vol. 170, 5 February 2020 (2020-02-05), pages 480 - 486, XP086124761, ISSN: 0094-5765, [retrieved on 20200205], DOI: 10.1016/J.ACTAASTRO.2020.02.001

## Description

### Domaine technique

La présente invention appartient au domaine des télécommunications par satellite, et concerne plus particulièrement la réception de messages ADS-B (« Automatic Dependent Surveillance-Broadcast ») depuis un satellite en orbite défilante autour de la Terre.

### Technique antérieure

De nos jours, la plupart des aéronefs, et plus particulièrement les avions, émettent spontanément des messages ADS-B.

Plusieurs protocoles de couche physique existent pour les messages ADS-B. Le plus répandu est connu sous le nom de « 1090 MHz Extended Squitter » ou 1090 ES et est une extension des transpondeurs radar Mode S utilisant des fréquences autour de 1090 mégahertz (MHz). D'autres protocoles de couche physique sont également connus, et on peut citer en particulier le protocole UAT (« Universal Access Transponder ») qui utilise des fréquences autour de 978 MHz ou encore le protocole VDL (« VHF Data Link ») Mode 4 qui utilise des fréquences autour de 108-118 MHz.

Les messages ADS-B sont émis notamment afin d'éviter les collisions entre avions. En effet, un avion équipé d'un transpondeur ADS-B émet de manière récurrente des messages ADS-B qui comportent notamment la position de l'avion (généralement sous la forme de coordonnées GPS - « Global Positioning System »), la direction de l'avion, la vitesse de l'avion, etc. Ces messages ADS-B peuvent être reçus par tout avion se trouvant à portée de l'avion émetteur, et l'avion récepteur peut alors comparer sa propre position, direction, vitesse, etc., à celles indiquées dans les messages ADS-B reçus, et détecter tout risque de collision et, le cas échéant, en informer l'équipe de pilotage.

De tels messages ADS-B peuvent également être reçus par des stations sol ADS-B, permettant ainsi aux autorités de contrôle de trafic aérien de connaître les positions, directions, vitesses, etc., des avions se trouvant à portée de stations sol ADS-B, et d'exploiter ces informations pour améliorer significativement la connaissance et le contrôle du trafic aérien.

Toutefois, il existe de nombreuses zones géographiques dans lesquelles il n'est pas possible d'installer des stations sol ADS-B. C'est le cas par exemple pour les océans, les montagnes, les déserts, etc. Ainsi, la couverture géographique de la surface terrestre, pour collecter des messages ADS-B au moyen de stations sol ADS-B, ne peut être que partielle.

Afin d'augmenter la couverture géographique pour la collecte de messages ADS-B, il a été proposé d'embarquer des dispositifs de réception ADS-B dans des satellites, afin de compléter la couverture géographique fournie par des stations sol ADS-B, voire de remplacer lesdites stations sol ADS-B. Ainsi, les messages ADS-B émis par des avions peuvent être reçus par un satellite, qui renvoie les informations incluses dans les messages ADS-B reçus à destination d'une station terrestre. Typiquement, les informations incluses dans les messages ADS-B sont émises vers les stations terrestres en utilisant un protocole de couche physique différent du protocole ADS-B, par exemple utilisant une bande de fréquences réservée pour les communications par satellite.

Toutefois, les protocoles ADS-B n'ont pas été conçus pour que les messages ADS-B soient reçus depuis des satellites. Par conséquent, la réception de messages ADS-B depuis des satellites, y compris en orbite basse (« Low Earth Orbit » ou LEO dans la littérature anglo-saxonne) soulève certaines difficultés.

Notamment, du fait de son positionnement à une altitude élevée et de son champ de vision dirigé vers la Terre, un satellite est susceptible de recevoir des messages ADS-B émis depuis des zones géographiques beaucoup plus grandes que la portée maximale du protocole ADS-B dans le cas d'une communication terrestre entre deux avions ou entre un avion et une station terrestre ADS-B. Ainsi, un satellite est susceptible de recevoir des messages ADS-B par un nombre d'avions beaucoup plus important que dans le cas d'une communication terrestre. Il en résulte que la probabilité de collision entre messages ADS-B au niveau d'un satellite est significativement plus grande que dans le cas d'une communication terrestre, et il est très difficile de détecter des messages ADS-B lorsque le nombre de collisions entre messages ADS-B est important.

Afin de réduire la probabilité de collision, il est connu d'embarquer une antenne adaptée à former une pluralité de faisceaux, chaque faisceau étant plus étroit que le champ de vision du satellite. Ainsi, l'empreinte au sol d'un faisceau, dite « spot », est réduite par rapport à la zone de service définie par l'empreinte au sol du champ de vision du satellite, réduisant par conséquent le nombre de messages ADS-B susceptibles d'être reçus dans un faisceau, et réduisant donc également la probabilité de collision dans un faisceau. [Yu2020] propose également d'adapter la taille des faisceaux en fonction de la densité des avions.

Toutefois, pour pouvoir collecter les messages ADS-B émis depuis toute la zone de service, il faut pouvoir traiter simultanément les signaux reçus dans les différents faisceaux, ce qui impose d'embarquer dans le satellite un plus grand nombre de modules de traitement, pouvant aller jusqu'à embarquer autant de modules de traitement que de faisceaux formés (indépendamment des questions de redondance pour lesquels des modules de traitement additionnels pourraient être embarqués pour pallier à une défaillance d'une module de traitement).

Ainsi, plus le nombre de faisceaux est grand et plus les spots formés sont potentiellement petits, ce qui permet de réduire la probabilité de collision dans chaque faisceau. Cependant, plus le nombre de faisceaux est grand et plus le nombre de modules de traitement devant être embarqué dans le satellite est potentiellement grand, ce qui augmente défavorablement le volume et la masse du satellite, ainsi que sa consommation électrique.

### Résumé

La présente invention a pour objectif de remédier à tout ou partie des limitations des solutions de l'art antérieur, notamment celles exposées ci-avant, en proposant une solution qui permette de collecter des messages ADS-B depuis un satellite tout en limitant la probabilité de collision entre messages ADS-B et le nombre de modules de traitement devant être embarqués dans le satellite.

A cet effet, et selon un premier aspect, il est proposé un dispositif de réception de messages ADS-B pour satellite en orbite défilante autour de la Terre, le dispositif de réception comportant un réseau de sources et un module de formation de faisceaux adapté à former des faisceaux à l'intérieur d'un champ de vision dudit réseau de sources, une empreinte au sol dudit champ de vision définissant une zone de service dudit dispositif de réception, des zones de service différentes étant associées à des positions respectives différentes du satellite sur l'orbite défilante, une empreinte au sol d'un faisceau définissant un spot à l'intérieur de la zone de service, ledit module de formation de faisceaux étant configuré pour former chaque faisceau en combinant des signaux fournis par le réseau de sources en appliquant des coefficients de combinaison. En outre, ledit dispositif de réception comporte un circuit de traitement configuré pour obtenir une information représentative d'une position du satellite sur l'orbite défilante et pour modifier un jeu de coefficients de combinaison du module de formation de faisceaux pour adapter la superficie et/ou la forme des spots des faisceaux formés à une distribution géographique des aéronefs à l'intérieur de la zone de service associée à la position dudit satellite sur l'orbite défilante.

Ainsi, la superficie et/ou la forme des spots des faisceaux formés sont adaptées de manière dynamique, à mesure que le satellite se déplace sur son orbite défilante, à la distribution géographique, connue a priori, des aéronefs à l'intérieur de la zone de service associée à la position courante dudit satellite sur son orbite défilante.

En effet, il est possible d'établir a priori une carte de densité d'aéronefs à l'échelle de tout ou partie de la Terre, sur la base d'une connaissance a priori du trafic aérien. Une telle carte de densité d'aéronefs représente par exemple la densité moyenne ou la densité maximale d'aéronefs survolant chaque partie de la surface terrestre. En pratique, la probabilité de collision augmente avec le nombre d'aéronefs présents dans un spot de faisceau. Pour limiter la probabilité de collision, il est donc avantageux, pour définir les spots de faisceaux à former, de tenir compte d'une connaissance a priori de la distribution géographique théorique des aéronefs dans la zone de service considérée.

Par exemple, pour limiter la probabilité de collision dans les faisceaux, il est possible de former des spots de faisceaux de superficies différentes suivant la densité d'aéronefs dans les parties respectives de la zone de service dans lesquelles les spots doivent être formés. Par exemple, il est possible de former des spots de petite superficie dans des parties à forte densité d'aéronefs, et de former a contrario des spots de grande superficie dans des parties à faible densité d'aéronefs. Il est également possible, dans certains exemples, de déterminer la superficie et/ou la forme de chaque spot de sorte à assurer que le nombre d'aéronefs, susceptible d'être présents dans chaque spot d'après la distribution géographique des aéronefs dans la zone de service, reste inférieur à une valeur seuil prédéterminée. Ladite valeur seuil est par exemple de l'ordre de 200 aéronefs, voire de l'ordre de 100 aéronefs.

On comprend donc que la prise en compte de la distribution géographique théorique des aéronefs dans la zone de service considérée permet d'adapter les faisceaux formés au trafic aérien prévu dans cette zone de service. Cette adaptation permet notamment d'optimiser le nombre de faisceaux formés, dont la superficie et/ou la forme peuvent être par exemple déterminées pour avoir sensiblement la même probabilité de collision dans chaque faisceau formé. Une telle optimisation du nombre de faisceaux formés permet donc de réduire les besoins en termes de modules de traitement à embarquer dans le satellite, puisque le nombre maximal de faisceaux devant être formés simultanément détermine le nombre minimal de modules de traitement à embarquer dans le satellite.

En effet, dans les solutions de l'art antérieur, les faisceaux formés étaient statiques (non modifiables de manière dynamique). Leurs formes et superficies étaient déterminées une fois pour toutes et dimensionnées pour le pire cas. Les faisceaux ainsi formés étaient nécessairement tous dimensionnés pour limiter le nombre maximal d'aéronefs pouvant se trouver dans les spots correspondants, ce qui imposait notamment d'avoir une superficie faible pour tous les spots de faisceaux et, in fine, un grand nombre de faisceaux à former. Selon l'invention, des spots de faisceaux de faible superficie ne sont formés que dans les parties de la zone de service où cela est nécessaire. Ailleurs, il est possible d'augmenter la superficie des spots de faisceaux, ce qui permet de réduire le nombre total de faisceaux à former pour couvrir toute la zone de service.

Il est à noter que les faisceaux à former à l'intérieur d'une zone de service donnée ne sont pas nécessairement tous formés simultanément. Il est possible également de former tout ou partie des faisceaux successivement, pendant une période d'observation de la zone de service, de durée prédéterminée. Former certains faisceaux successivement (connu sous le nom de « beam hopping » dans la littérature anglo-saxonne) permet de réduire le nombre de faisceaux à activer simultanément, ce qui permet de réduire également le nombre de modules de traitement à embarquer dans le satellite.

En outre, le circuit de traitement est configuré pour contrôler les durées d'activation respectives des spots des faisceaux formés à l'intérieur de la zone de service associée à la position du satellite en fonction de la distribution géographique des aéronefs à l'intérieur de ladite zone de service.

De telles dispositions sont avantageuses en ce qu'elles permettent d'adapter les durées d'activation respectives des spots de faisceaux, c'est-à-dire les durées pendant lesquelles lesdits spots de faisceaux sont effectivement formés, aux conditions de trafic aérien prévues dans la zone de service. Une telle adaptation peut permettre de réduire la probabilité de collision et/ou de résoudre certaines collisions. En particulier, l'émission des messages ADS-B est pseudopériodique en ce que la période d'émission des messages ADS-B comporte une partie fixe et une partie aléatoire. Du fait de cette partie aléatoire, deux aéronefs qui émettent des messages ADS-B respectifs en même temps émettront leurs messages ADS-B suivants à des instants différents. Ainsi, une écoute (durée d'activation) prolongée d'un spot permet de résoudre certaines collisions. En outre, une écoute prolongée permet également d'améliorer la résolution de collisions lors de la mise en œuvre de techniques de détection multiutilisateurs (« Multi-User Detection » ou MUD dans la littérature anglo-saxonne). De manière plus générale, plus le nombre d'aéronefs présents dans un spot de faisceau est grand et plus le temps nécessaire pour extraire chaque message ADS-B reçu dans ce spot de faisceau est potentiellement grand.

Ainsi, il est avantageux, par exemple, de prévoir des durées d'activation plus importantes pour des spots de faisceaux susceptibles de comporter un grand nombre d'aéronefs que pour des spots de faisceaux susceptibles de comporter un nombre plus faible d'aéronefs. En outre, une telle optimisation des durées d'activation permet d'optimiser également les traitements sur une période d'observation de durée prédéterminée. En particulier, la réduction de la durée d'activation lorsque c'est possible (nombre d'aéronefs a priori faible dans le faisceau concerné) permet dans certains cas de traiter de manière séquentielle, par un même module de traitement, des faisceaux dont la somme des durées d'activation reste inférieure à la durée de la période d'observation. La durée d'activation d'un faisceau doit cependant être suffisante pour permettre à chaque aéronef se trouvant dans le spot associé d'émettre au moins un message ADS-B.

Dans des modes particuliers de réalisation, le dispositif de réception peut comporter en outre l'une ou plusieurs des caractéristiques suivantes, prises isolément ou selon toutes les combinaisons techniquement possibles.

Dans des modes particuliers de réalisation, le jeu de coefficients est modifié pour adapter la forme d'au moins un spot de faisceau formé à une trajectoire privilégiée des aéronefs à l'intérieur de la zone de service associée à la position du satellite.

En effet, le trafic aérien n'est pas aléatoire, et il existe parfois des couloirs aériens vers lesquels convergent de nombreux aéronefs, par exemple pour relier l'Europe à l'Amérique du Nord. De tels couloirs aériens correspondent à des trajectoires privilégiées qui peuvent également être prises en compte lors de la définition des spots de faisceaux à former. Par exemple, la forme d'au moins un spot de faisceau peut être choisie oblongue suivant une trajectoire privilégiée des aéronefs ou encore oblongue transversalement à ladite trajectoire privilégiée.

Dans des modes particuliers de réalisation, le jeu de coefficients de combinaison est configuré pour ne pas former de spots à l'intérieur d'une zone d'exclusion prédéterminée pour la zone de service associée à la position du satellite. Par exemple, la zone d'exclusion peut correspondre à une zone géographique pourvue de stations sol ADS-B et/ou à une zone géographique dans laquelle la densité d'aéronefs est supérieure à une valeur seuil prédéterminée.

Dans des modes particuliers de réalisation, le dispositif de réception comporte un module de réception d'un plan de mission, ledit plan de mission comportant une pluralité de jeux de coefficients de combinaison pour le module de formation de faisceaux, chaque jeu de coefficients de combinaison étant associé à une position respective du satellite sur l'orbite défilante et permettant de former des spots de faisceaux dont la superficie et/ou la forme est adaptée à la distribution géographique théorique des aéronefs à l'intérieur de la zone de service associée à ladite position respective du satellite sur ladite orbite défilante.

Selon un deuxième aspect, il est proposé un satellite comportant un dispositif de réception selon l'un quelconque des modes de réalisation de l'invention.

Selon un troisième aspect, il est proposé un procédé de contrôle, par une station terrestre, d'un dispositif de réception de messages ADS-B embarqué dans un satellite en orbite défilante autour de la Terre, ledit dispositif de réception comportant un réseau de sources et un module de formation de faisceaux adapté à former des faisceaux à l'intérieur d'un champ de vision dudit réseau de sources, une empreinte au sol dudit champ de vision définissant une zone de service dudit dispositif de réception, des zones de service différentes étant associées à des positions respectives différentes du satellite sur l'orbite défilante, une empreinte au sol d'un faisceau définissant un spot à l'intérieur de la zone de service, ledit module de formation de faisceaux étant configuré pour former chaque faisceau en combinant des signaux fournis par le réseau de sources en appliquant des coefficients de combinaison. Le procédé de contrôle comporte, pour chacune parmi une pluralité de positions prédéterminées du satellite sur ladite orbite défilante, des étapes de :
- obtention d'une carte de densité d'aéronefs représentative de la distribution géographique des aéronefs à l'intérieur de la zone de service associée à la position considérée du satellite sur l'orbite défilante,
- détermination d'un jeu de coefficients de combinaison en fonction de la carte de densité d'aéronefs, le jeu de coefficients de combinaison étant déterminé pour adapter la superficie et/ou la forme des spots de faisceaux formés à la distribution géographique des aéronefs à l'intérieur de la zone de service associée à la position considérée,
- détermination d'une durée d'activation de chaque spot de faisceau en fonction de la distribution géographique des aéronefs à l'intérieur de la zone de service associée à la position considérée.
Le procédé de contrôle comporte en outre une étape d'émission, à destination du dispositif de réception embarqué dans le satellite, d'un plan de mission regroupant les jeux de coefficients de combinaison associés respectivement à la pluralité de positions du satellite sur l'orbite défilante.

Dans des modes particuliers de mise en œuvre, le procédé de contrôle peut comporter en outre l'une ou plusieurs des caractéristiques suivantes, prises isolément ou selon toutes les combinaisons techniquement possibles.

Dans des modes particuliers de mise en œuvre, chaque jeu de coefficients de combinaison permet de former une pluralité de faisceaux simultanément et/ou successivement au cours d'une période d'observation de durée prédéterminée de la zone de service associée à la position associée audit jeu de coefficients de combinaison.

Dans des modes particuliers de réalisation, les jeux de coefficients de combinaison sont déterminés pour former des spots de superficie moins importante dans des parties à forte densité d'aéronefs de la zone de service considérée que dans des parties à faible densité d'aéronefs de la zone de service considérée.

Dans des modes particuliers de mise en œuvre, les jeux de coefficients de combinaison sont déterminés pour contrôler la superficie et/ou la forme de chaque spot de faisceau pour avoir un nombre d'aéronefs à l'intérieur de chaque spot de faisceau inférieur à une valeur seuil prédéterminée.

Dans des modes particuliers de mise en œuvre, au moins un jeu de coefficients de combinaison est déterminé pour adapter la forme d'au moins un spot de faisceau à une trajectoire privilégiée des aéronefs à l'intérieur de la zone de service associée à la position considérée.

Dans des modes particuliers de mise en œuvre, la forme de l'au moins un spot de faisceau est oblongue suivant la trajectoire privilégiée des aéronefs ou oblongue transversalement à ladite trajectoire privilégiée des aéronefs.

Dans des modes particuliers de mise en œuvre, au moins un jeu de coefficients de combinaison est configuré pour ne pas former de spots à l'intérieur d'une zone d'exclusion prédéterminée à l'intérieur de la zone de service associée à la position considérée.

Selon un quatrième aspect, il est proposé une station terrestre comportant des moyens configurés pour mettre en œuvre un procédé de contrôle selon l'un quelconque des modes de mise en œuvre de l'invention.

Selon un cinquième aspect, il est proposé un système de réception de messages ADS-B émis par des aéronefs, ledit système de réception comportant au moins une station terrestre selon l'un quelconque des modes de réalisation de l'invention et au moins un satellite en orbite défilante autour de la Terre, ledit au moins un satellite embarquant un dispositif de réception de messages ADS-B selon l'un quelconque des modes de réalisation de l'invention.

### Brève description des dessins

L'invention sera mieux comprise à la lecture de la description suivante, donnée à titre d'exemple nullement limitatif, et faite en se référant aux figures qui représentent :
Figure 1 : une représentation schématique d'un mode particulier de réalisation d'un système de réception par satellite de messages ADS-B émis par des aéronefs,
Figure 2 : une représentation schématique d'un mode particulier de réalisation d'un dispositif de réception de messages ADS-B pour satellite,
Figure 3 : une représentation schématique d'un mode particulier de réalisation d'une station terrestre pour le contrôle d'un satellite embarquant un dispositif de réception de messages ADS-B,
Figure 4 : un diagramme illustrant les principales étapes d'un mode particulier de mise en œuvre d'un procédé de contrôle d'un satellite embarquant un dispositif de réception de messages ADS-B,
Figure 5 : un exemple illustrant la formation de faisceaux pour la collecte de messages ADS-B dans une zone de service d'un satellite embarquant un dispositif de réception de messages ADS-B,
Figure 6 : un diagramme illustrant les principales étapes d'un mode particulier de mise en œuvre de la détermination d'un jeu de coefficients de combinaison et de durées d'activation de faisceaux.

Dans ces figures, des références identiques d'une figure à une autre désignent des éléments identiques ou analogues. Pour des raisons de clarté, les éléments représentés ne sont pas à l'échelle, sauf mention contraire.

### Description des modes de réalisation

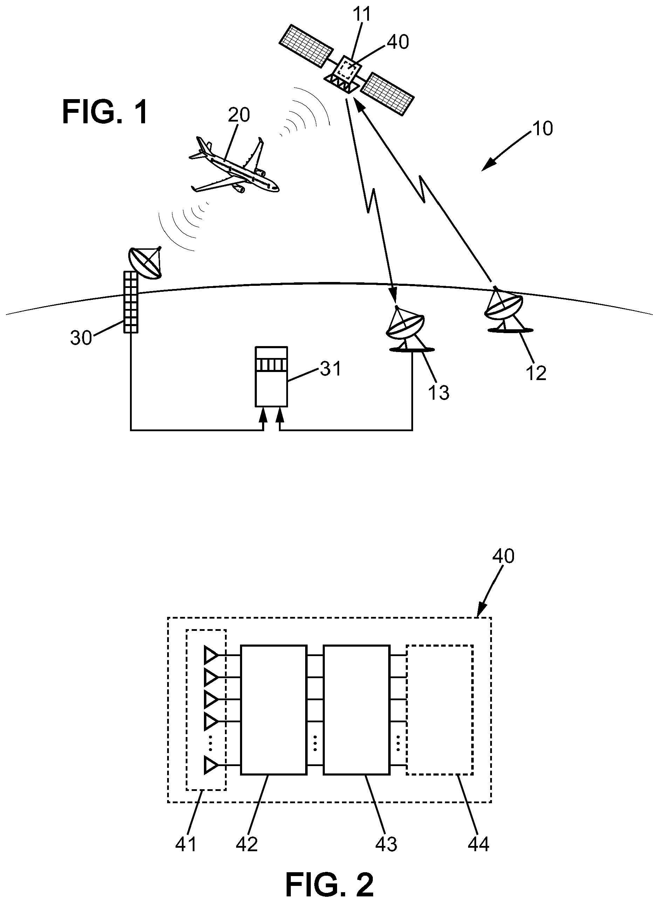

La figure 1 représente schématiquement un exemple de réalisation d'un système 10 de réception par satellite de messages ADS-B émis par des aéronefs, tels que des avions 20.

Tel qu'illustré par la figure 1, le système 10 de réception comporte un ou plusieurs satellites 11, chaque satellite 11 embarquant un dispositif 40 de réception de messages ADS-B qui sera décrit ci-après en référence à la figure 2.

Tel qu'indiqué précédemment, plusieurs protocoles de couche physique existent pour les messages ADS-B, et le dispositif 40 de réception supporte au moins un protocole de couche physique possible pour les messages ADS-B, par exemple le protocole 1090 ES. Le dispositif 40 de réception peut également supporter plusieurs protocoles de couche physique, et peut en particulier supporter à la fois les protocoles 1090 ES, UAT et VDL Mode 4.

Les messages ADS-B émis par les avions 20 sont reçus par le dispositif 40 de réception du satellite 11. Les messages ADS-B détectés et/ou les informations incluses dans les messages ADS-B détectés sont retransmis vers le sol, à destination d'une station terrestre 13 de collecte. La présente invention concerne principalement la collecte des messages ADS-B par le satellite 11, et les traitements effectués sur les messages ADS-B reçus par le dispositif 40 de réception, en dehors de ceux détaillés ci-après, sortent du cadre de la présente invention. Ainsi, le dispositif 40 de réception peut être indifféremment, pour les messages ADS-B, une charge utile transparente ou régénérative. De même, la liaison descendante depuis le satellite 11 vers la station terrestre 13 de collecte sort du cadre de la présente invention, étant entendu que les messages ADS-B détectés par le satellite 11 et/ou les informations qui en sont extraites doivent pouvoir être descendus au sol, directement ou indirectement (par le biais d'un autre satellite), pour pouvoir être exploitées, par exemple par les autorités de trafic aérien. Typiquement, la liaison descendante depuis le satellite 11 vers la station terrestre 13 de collecte utilise un protocole de couche physique différent du protocole ADS-B, par exemple utilisant une bande de fréquences réservée pour les communications par satellite.

Le satellite 11 est en orbite défilante, c'est-à-dire que sa projection au sol se déplace à la surface de la Terre. L'orbite défilante du satellite 11 est par exemple une orbite à basse altitude (LEO) ou une orbite à moyenne altitude (« Medium Earth Orbit » ou MEO). De préférence, l'altitude de l'orbite défilante est égale ou inférieure à 2000 kilomètres (km), voire égale ou inférieure à 1000 km. L'orbite défilante est par exemple une orbite inclinée, telle qu'une orbite polaire.

Tel qu'illustré par la figure 1, les messages ADS-B émis par les avions 20 peuvent également être reçus par des stations sol ADS-B 30. Contrairement aux stations terrestres 13 de collecte, les stations sol ADS-B 30 reçoivent directement les messages ADS-B émis par les avions, alors que les stations terrestres 13 de collecte visent à collecter au sol les messages ADS-B reçus par le satellite 11. En outre, dans l'exemple non limitatif illustré par la figure 1, les stations sol ADS-B 30 et les stations terrestres 13 de collecte sont reliées à un même centre 31 de surveillance du trafic aérien, vers lequel elles envoient les informations incluses dans les messages ADS-B reçus. Rien n'exclut cependant, suivant d'autres exemples, d'avoir notamment un système 10 de réception par satellite de messages ADS-B dépourvu de stations sol ADS-B 30, auquel cas les messages ADS-B sont collectés exclusivement par des satellites 11.

Dans l'exemple non limitatif illustré par la figure 1, le système 10 de réception par satellite de messages ADS-B comporte également au moins une station terrestre 12 de contrôle de l'au moins un satellite 11. La station terrestre 12 de contrôle est utilisée, dans certains modes de réalisation, pour envoyer à un satellite 11 des informations de configuration du dispositif 40 de réception dudit satellite 11. Il est à noter que, dans des modes particuliers de réalisation, la station terrestre 12 de contrôle peut être confondue avec une station terrestre 13 de collecte, auquel cas elle émet des informations de configuration à destination du satellite 11 et reçoit du satellite 11 les informations incluses dans les messages ADS-B reçus par ledit satellite 11. Les informations de configuration sont émises vers le satellite 11 en utilisant un protocole de couche physique différent du protocole ADS-B, par exemple utilisant une bande de fréquences réservée pour les communications par satellite.

La figure 2 représente schématiquement un exemple de réalisation d'un dispositif 40 de réception de messages ADS-B. Tel qu'illustré par la figure 2, le dispositif 40 de réception comporte un réseau 41 de sources, un module 42 de formation de faisceaux et un circuit 43 de traitement. Il est à noter que le dispositif 40 de réception peut comporter également d'autres éléments, notamment pour la partie réception radioélectrique (amplificateurs faible bruit, filtres analogiques, mélangeurs, oscillateurs locaux, etc.), qui sortent du cadre de la présente invention et ne sont pas représentés à des fins de clarté des figures.

Le réseau 41 de sources du dispositif 40 de réception est adapté à recevoir les messages ADS-B émis par les avions 20. Chaque source du réseau 41 de sources peut être de tout type connu de l'homme du métier, et le choix d'un type particulier de source ne constitue qu'une variante d'implémentation du dispositif 40 de réception. Par exemple, il est possible d'utiliser des sources de type antenne patch, antenne cornet, etc.

Le réseau 41 de sources détermine un champ de vision du dispositif 40 de réception, à l'intérieur duquel le dispositif 40 de réception peut recevoir des messages ADS-B émis par des avions 20 à la surface de la Terre. L'empreinte au sol du champ de vision définit une zone de service du dispositif 40 de réception. Il est à noter que le champ de vision du réseau 41 de sources peut également être limité par la rotondité de la Terre, auquel cas la zone de service se limite à la partie de la Terre qui est effectivement visible depuis le satellite 11. Du fait du caractère défilant de l'orbite du satellite 11, la zone de service n'est pas figée et se déplace avec le satellite 11. Ainsi, des zones de service différentes sont associées à des positions respectives différentes du satellite 11 sur son orbite défilante.

Le module 42 de formation de faisceaux est adapté à former des faisceaux à l'intérieur du champ de vision du réseau 41 de sources. L'empreinte au sol d'un faisceau formé, à l'intérieur de la zone de service, est désignée par « spot ».

De manière connue en soi, le module 42 de formation de faisceaux combine, pour la formation d'un faisceau, des signaux fournis par tout ou partie des sources du réseau 41 de sources au moyen de coefficients de combinaison. Chaque coefficient de combinaison est une grandeur définie par un gain et une phase. En contrôlant de manière appropriée les coefficients de combinaison, il est possible de contrôler le diagramme de rayonnement du faisceau. Ainsi, il est possible de contrôler de manière dynamique différents paramètres du faisceau, comme par exemple la direction principale de rayonnement (et donc la position du spot dans la zone de service), la largeur du lobe principal de rayonnement dans plusieurs dimensions (et donc la forme et la superficie du spot dans la zone de service), etc. Dans la présente invention, les coefficients de combinaison sont modifiables de manière dynamique pour permettre d'adapter les différents faisceaux formés aux conditions de trafic aérien prévues dans la zone de service.

Tel qu'indiqué ci-dessus, plusieurs coefficients de combinaison sont nécessaires pour former un faisceau. On désigne par « jeu de coefficients de combinaison » l'ensemble comportant tous les coefficients de combinaison de tous les faisceaux à former à l'intérieur d'une seule zone de service. Un jeu de coefficients de combinaison comporte donc plusieurs coefficients de combinaison à utiliser pour former un premier faisceau, plusieurs coefficients de combinaison à utiliser pour former un second faisceau, etc.

Le module 42 de formation de faisceaux peut être par exemple principalement analogique, et comporter pour appliquer des coefficients de combinaison variables des déphaseurs et gains analogiques commandables. Le cas échéant, la modification des coefficients de combinaison s'effectue en commandant de manière approprié les déphaseurs et gains analogiques.

Suivant d'autres exemples, le module 42 de formation de faisceaux peut être entièrement numérique, auquel cas il peut être intégré dans le circuit 43 de traitement qui est décrit ci-après. Dans un tel cas, les coefficients de formation de faisceaux sont appliqués directement sur des signaux numériques obtenus après conversion analogique / numérique des signaux fournis par les sources du réseau 41 de sources. L'utilisation d'un module 42 de formation de faisceaux entièrement numérique est avantageuse en ce qu'elle permet d'appliquer plus rapidement de nouveaux coefficients de combinaison, mais également en ce que les coefficients de combinaison peuvent être déterminés et contrôlés de manière plus précise, de sorte qu'il est plus aisé de former des faisceaux à la fois précis et complexes.

Le circuit 43 de traitement comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour contrôler le module 42 de formation de faisceaux. Alternativement ou en complément, le circuit 43 de traitement peut comporter un ou des circuits logiques programmables (FPGA, PLD, etc.), et/ou un ou des circuits intégrés spécialisés (ASIC, etc.), et/ou un ensemble de composants électroniques discrets, etc., adaptés à effectuer tout ou partie du contrôle du module 42 de formation de faisceaux.

En pratique, le circuit 43 de traitement est configuré pour obtenir une information représentative de la position du satellite 11 sur l'orbite défilante. L'information représentative de la position du satellite 11 peut correspondre par exemple directement à la position courante dudit satellite 11, par exemple sous la forme de coordonnées GPS. Suivant un autre exemple non limitatif, l'information représentative de la position du satellite 11 peut correspondre par exemple à une date courante. En effet, il est possible de prévoir à l'avance la date à laquelle le satellite 11 se trouvera à une position prédéterminée, de sorte que toute date est associée à une position du satellite 11 sur son orbite défilante. L'obtention d'une information représentative de la position est réalisée de manière conventionnelle, et le choix d'une méthode particulière d'obtention d'une telle information représentative de la position du satellite 11 sur son orbite défilante ne constitue qu'une variante d'implémentation du dispositif 40 de réception.

La position du satellite 11 sur son orbite défilante détermine la zone de service associée à l'intérieur de laquelle le module 42 de formation de faisceaux doit former des spots de faisceaux.

Pour chaque zone de service, il est possible d'établir a priori, c'est-à-dire avant que le satellite 11 ne survole ladite zone de service en vue d'y former des spots de faisceaux, une carte de densité d'avions représentative d'une distribution géographique théorique des avions à l'intérieur de chaque zone de service. En effet, le trafic aérien est contrôlé suivant certaines règles bien établies. Par exemple, il existe des couloirs aériens qui représentent des trajectoires privilégiées suivies au moins localement par des avions. En outre, les aéroports sont des points de convergence pour les avions qui déterminent les trajectoires des avions, etc. Il en découle que le trafic aérien n'est pas aléatoire, et que la densité d'avions n'est pas la même en tout point de la surface terrestre, et varie dans la journée. Ainsi, il est possible de réaliser a priori une analyse statistique du trafic aérien, afin d'estimer a priori la carte de densité des avions à l'échelle de tout ou partie de la Terre, représentative de la distribution géographique des avions. La carte de densité des avions peut comporter par exemple une densité moyenne des avions, une densité maximale des avions, etc., pour chaque partie de chaque zone de service. La carte de densité des avions permet donc de savoir notamment quelles parties d'une zone de service donnée sont densément peuplées d'avions, et quelles autres parties de ladite zone de service sont peu densément peuplées. Une telle carte de densité d'avions peut être mise à jour de manière récurrente, pour tenir compte des évolutions du trafic aérien. Une telle mise à jour peut prendre en compte des observations de trafic aérien réalisées sur la base de messages ADS-B reçus par le satellite 11, lors de survols précédents de chaque zone de service.

Il est à noter ici que la carte de densité des avions ne concerne pas tous les avions, mais uniquement les avions qui émettent des messages ADS-B. En effet, tous les avions ou aéronefs ne sont pas équipés de transpondeurs ADS-B, et seuls ceux qui émettent des messages ADS-B présentent un intérêt pour le dispositif 40 de réception. Il est cependant possible, dans certains modes de mise en œuvre, de prendre en compte également les aéronefs qui émettent des signaux dans les mêmes bandes de fréquences que celles des messages ADS-B considérés. Par exemple, les transpondeurs radar Mode S utilisent la même fréquence que les messages ADS-B du protocole 1090 ES. L'établissement de la carte de densité d'aéronefs peut donc également prendre en compte les aéronefs qui, bien que n'émettant pas de messages ADS-B 1090 ES, sont équipés de transpondeurs radar Mode S.

Etant donné que la distribution géographique (théorique) des avions à l'intérieur de chaque zone de service est connue a priori, il est possible d'adapter les faisceaux formés aux conditions de trafic aérien prévues à l'intérieur de la zone de service associée à la position courante du satellite 11.

A cet effet, le circuit 43 de traitement est configuré pour modifier un jeu de coefficients de combinaison du module 42 de formation de faisceaux pour adapter la superficie et/ou la forme des spots des faisceaux formés à la distribution géographique des avions à l'intérieur de la zone de service associée à la position du satellite 11 sur son orbite défilante, en fonction de l'information représentative de ladite position dudit satellite 11 sur son orbite défilante.

De préférence, le circuit 43 de traitement mémorise un plan de mission comportant une pluralité de jeux de coefficients de combinaison, chaque jeu de coefficients de combinaison étant associé à une position respective du satellite 11 sur l'orbite défilante et permettant de former des spots de faisceaux dont la superficie et/ou la forme est adaptée à la distribution géographique des aéronefs à l'intérieur de la zone de service associée à ladite position respective du satellite 11 sur ladite orbite défilante. Le plan de mission regroupe donc les jeux de coefficients de combinaison qui vont être appliqués successivement par le satellite 11, d'une zone de service à une autre, à mesure que le satellite 11 se déplace d'une position à une autre sur son orbite défilante.

Le plan de mission peut être déterminé par le circuit 43 de traitement, en fonction de cartes de densité d'avions associées aux différentes zones de service, les cartes de densité d'avions pouvant être mémorisées sous la forme d'une unique carte globale de densité d'avions représentative de la distribution géographique des avions dans toutes les zones de service. Les cartes de densité d'avion peuvent être reçues par exemple de la station terrestre 12 de contrôle.

Dans des modes préférés de réalisation, le plan de mission est calculé au sol, par exemple par la station terrestre 12 de contrôle. Le cas échéant, le dispositif 40 de réception comporte, tel qu'illustré par la figure 2, un module 44 de réception du plan de mission, émis par la station terrestre 12 de contrôle en tant qu'information de configuration. Le plan de mission mémorisé par le dispositif 40 de réception de messages ADS-B peut être mis à jour de manière récurrente par la station terrestre 12 de contrôle, pour tenir compte des évolutions du trafic aérien.

Ainsi, à partir de l'information représentative de la position du satellite, le circuit 43 de traitement retrouve dans le plan de mission mémorisé le jeu de coefficients de combinaison associé à la position correspondante du satellite 11, à utiliser pour la zone de service survolée par le satellite 11, et utilise ce jeu de coefficients de combinaison pour contrôler le module 42 de formation de faisceaux.

Le jeu de coefficients de combinaison est appliqué pendant une période d'observation de durée prédéterminée, qui peut varier d'une zone de service à une autre. Le jeu de coefficients de combinaison comporte les coefficients de combinaison de chaque faisceau à former. Chaque faisceau est formé pendant une durée d'activation qui est égale ou inférieure à la durée de la période d'observation, et qui peut varier d'un faisceau à un autre. Les faisceaux peuvent être formés simultanément et/ou successivement selon une séquence d'activation des faisceaux, associée au jeu de coefficients de combinaison, qui peut également être incluse dans le plan de mission. Le signal fourni par un faisceau, qui comporte les messages ADS-B reçus des avions se trouvant dans le spot associé, est traité par un module de traitement (non représenté sur les figures), qui peut être intégré dans le circuit 43 de traitement. Le dispositif 40 de réception comporte de préférence plusieurs modules de traitement, et chaque module de traitement est par exemple configuré pour détecter les messages ADS-B présents dans le signal de faisceau, et éventuellement extraire les informations incluses dans les messages ADS-B détectés. Le nombre de modules de traitement doit permettre de traiter les signaux de tous les faisceaux formés au cours de la période d'observation, et est par exemple égal ou supérieur au nombre maximal de faisceaux à former simultanément pour chaque zone de service. Les messages ADS-B détectés et/ou les informations extraites sont ensuite transmis à une station terrestre 13 de collecte, au moyen d'un module de transmission (non représenté sur les figures) du dispositif 40 de réception.

Dans la suite de la description, on se place de manière non limitative dans le cas où le plan de mission est calculé par la station terrestre 12 de contrôle, et est reçu par le dispositif 40 de réception qui l'applique pour contrôler le module 42 de formation de faisceaux, pour la réception des messages ADS-B. Le plan de mission comporte les jeux de coefficients de combinaison, et éventuellement les séquences d'activation associées, associés à une pluralité de positions que le satellite 11 va occuper sur un horizon temporel prédéterminé.

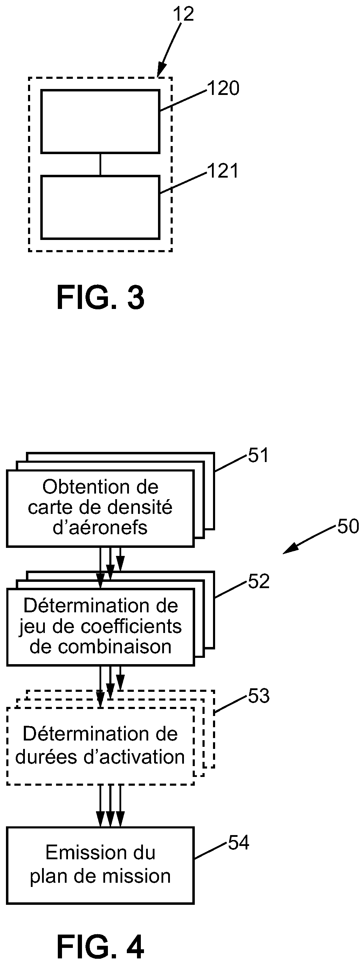

La figure 3 représente schématiquement un exemple de réalisation d'une station terrestre 12 de contrôle. Dans cet exemple, la station terrestre 12 de contrôle comporte un module 120 d'émission et un circuit 121 de traitement.

Le module 120 d'émission est utilisé pour émettre des informations de configuration à destination du module 44 de réception du satellite 11, où lesdites informations de configuration peuvent être utilisées par le circuit 43 de traitement. Les informations de configuration peuvent inclure le plan de mission à utiliser, ou une mise à jour d'un plan de mission mémorisé par le dispositif 40 de réception. Le module 120 d'émission correspond à un circuit radioélectrique comportant des équipements considérés comme connus de l'homme du métier.

Le circuit 121 de traitement comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre avec le module 120 d'émission les différentes étapes d'un procédé 50 de contrôle décrit ci-après. Alternativement ou en complément, le circuit 121 de traitement peut comporter un ou des circuits logiques programmables (FPGA, PLD, etc.), et/ou un ou des circuits intégrés spécialisés (ASIC, etc.), et/ou un ensemble de composants électroniques discrets, etc., adaptés à mettre en œuvre avec le module 120 d'émission tout ou partie des étapes du procédé 50 de contrôle.

En d'autres termes, le circuit 121 de traitement et le module 120 d'émission correspondent à des moyens configurés de façon logicielle (produit programme d'ordinateur spécifique) et/ou matérielle (FPGA, PLD, ASIC, composants électroniques discrets, circuit radioélectrique, etc.) pour effectuer tout ou partie des étapes du procédé 50 de contrôle décrit ci-après.

La figure 4 représente les principales étapes d'un exemple de mise en œuvre d'un procédé 50 de contrôle du dispositif 40 de réception, dont les étapes sont mises en œuvre par la station terrestre 12 de contrôle.

Tel qu'illustré par la figure 4, le procédé 50 de contrôle comporte, pour chaque position parmi une pluralité de positions prédéterminées du satellite 11 sur son orbite défilante, des étapes de :
- 51 obtention d'une carte de densité d'avions représentative de la distribution géographique des avions à l'intérieur de la zone de service associée à la position considérée du satellite 11 sur l'orbite défilante,
- 52 détermination d'un jeu de coefficients de combinaison en fonction de la carte de densité d'aéronefs.

La carte de densité d'avions obtenue pour une zone de service donnée correspond par exemple à une partie d'une carte globale de densité d'avions mémorisée par le circuit 121 de traitement. Tel qu'indiqué précédemment, les faisceaux sont formés pendant une durée d'observation de durée prédéterminée. Par conséquent, l'empreinte au sol du champ de vision du réseau 41 de sources va bouger pendant la période d'observation, du fait du déplacement du satellite 11 sur son orbite défilante. Il est par exemple possible de considérer que le déplacement de la zone de service est négligeable pendant la durée de la période d'observation, ou bien il est possible de considérer une zone de service de référence pour toute la période d'observation, qui correspond par exemple à la zone de service associée à la position initiale du satellite 11 au début de la période d'observation, ou à la position prévue du satellite 11 au milieu de la période d'observation, etc.

Ensuite, au cours de l'étape 52, le jeu de coefficients de combinaison est déterminé pour adapter la superficie et/ou la forme des spots de faisceaux formés à la distribution géographique des avions à l'intérieur de la zone de service associée à la position considérée. Ainsi, l'étape 52 de détermination d'un jeu de coefficients de combinaison pour une position donnée comporte la définition, à l'intérieur de la zone de service associée à la position considérée, de spots de faisceaux dont les superficies et/ou les formes sont adaptées à la distribution géographique des avions à l'intérieur de ladite zone de service. Une fois les superficies et/ou formes desdits spot définies, ainsi que les positions desdits spots à l'intérieur de ladite zone de service, le jeu de coefficients de combinaison permettant de former ces spots peut être calculé selon toute méthode connue de l'homme de l'art, le choix d'une méthode particulière de calcul ne constituant qu'une variante d'implémentation de l'invention.

Tel qu'indiqué précédemment, l'adaptation des spots de faisceaux aux conditions prévues du trafic aérien vise par exemple à former des spots de superficie moins importante dans des parties à forte densité d'avions que dans des parties à faible densité d'avions. Alternativement ou en complément, l'adaptation des spots de faisceaux vise par exemple à contrôler la superficie et/ou la forme de chaque spot de faisceau pour avoir un nombre d'avions à l'intérieur dudit spot de faisceau inférieur à une valeur seuil prédéterminée. Alternativement ou en complément, l'adaptation des spots de faisceaux vise par exemple à adapter la forme d'au moins un spot de faisceau à une trajectoire privilégiée des avions à l'intérieur de la zone de service associée à la position considérée.

Tel qu'illustré par la figure 4, le procédé 50 de contrôle comporte, pour chaque position considérée, une étape 53 de détermination de la durée d'activation de chaque spot de faisceau en fonction de la distribution géographique des avions à l'intérieur de la zone de service considérée. Les durées d'activation des spots de faisceaux peuvent être déterminées conjointement de la détermination des superficies et/ou formes desdits spots de faisceaux. Par exemple, il est possible de prévoir des durées d'activation plus importantes pour des spots de faisceaux susceptibles de comporter un grand nombre d'avions que pour des spots de faisceaux susceptibles de comporter un nombre plus faible d'avions. Rien n'exclut cependant, suivant d'autres exemples, de considérer une même durée d'activation pour tous les spots de faisceau, égale ou inférieure à la durée de la période d'observation pour la zone de service considérée.

La détermination des jeux de coefficients de combinaison pour former les faisceaux et des durées d'activation desdits faisceaux est par exemple réalisée par simulation, selon un processus itératif qui prend en compte la distribution géographique des avions dans la zone de service considérée, un nombre maximal d'avions dans chaque faisceau, la durée de la période d'observation, un nombre maximal de faisceaux pouvant être formés, etc. Un tel processus itératif vise par exemple à maximiser le nombre de messages ADS-B pouvant être détectés pendant la période d'observation, ou à maximiser la probabilité de détecter au moins un message ADS-B par avion se trouvant dans la zone de service considérée, etc.

De préférence, les spots de faisceaux à former sont déterminés de sorte à avoir un spot formé en toute partie de la zone de service considérée pendant au moins une partie de la période d'observation. De préférence, les spots de faisceaux à former peuvent également être déterminés pour présenter un recouvrement partiel entre spots adjacents, afin par exemple d'éviter de manquer les messages ADS-B émis par des avions se trouvant en limite de spots adjacents.

Il est à noter qu'il est également possible de ne pas chercher à couvrir toute la zone de service par des spots de faisceaux. En particulier, il est possible, dans des modes particuliers de mise en œuvre, de prévoir une zone d'exclusion à l'intérieur d'un zone de service. Ainsi, le jeu de coefficients de combinaison est configuré pour ne pas former de spots à l'intérieur de cette zone d'exclusion prédéterminée à l'intérieur de la zone de service associée à la position considérée.

Une telle zone d'exclusion est prédéterminée, et correspond par exemple à une zone géographique dans laquelle il existe d'autres moyens de recevoir les messages ADS-B émis par les avions, par exemple du fait de la présence de stations sol ADS-B 30 dans cette zone géographique. Une telle zone d'exclusion peut également correspondre à une zone géographique qui ne peut pas être correctement observée depuis un satellite 11, par exemple si la densité d'avions dans cette zone géographique est trop importante (aéroports, etc.). Cette possibilité d'exclure certaines zones géographiques lors de la formation de faisceaux, notamment les zones géographiques bien couvertes par d'autres moyens, permet également de réduire le nombre total de faisceaux à former.

Tel qu'illustré par la figure 4, le procédé 50 de contrôle comporte en outre une étape 54 d'émission, à destination du dispositif 40 de réception embarqué dans le satellite 11, du plan de mission regroupant les jeux de coefficients de combinaison associés respectivement à la pluralité de positions considérées du satellite 11 sur son orbite défilante.

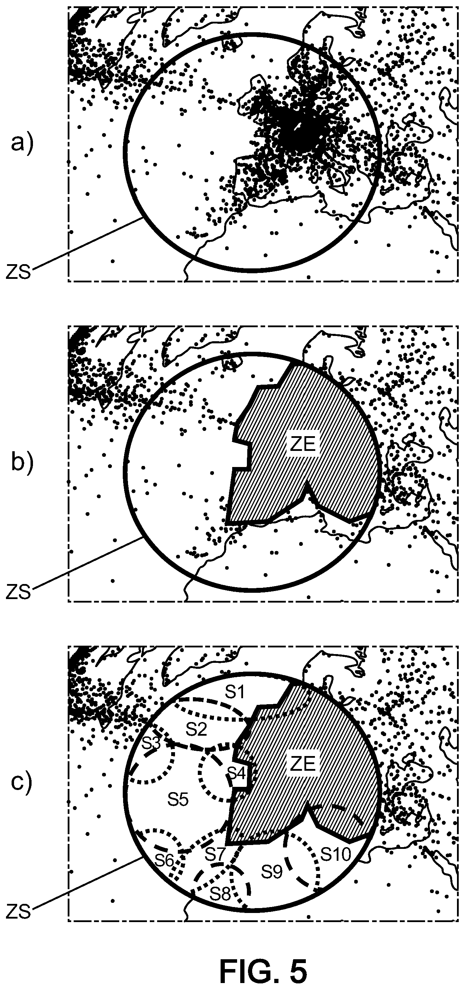

La figure 5 représente schématiquement un exemple de mise en œuvre du procédé 50 de contrôle.

Plus particulièrement, la partie a) de la figure 5 représente schématiquement un exemple de carte de densité d'avions représentant la distribution géographique des avions au niveau de l'Europe et de l'Afrique du Nord. La zone de service ZS est représentée en trait plein. Les avions sont représentés par des points noirs dans cette carte de densité d'avions, et on constate notamment que la densité des avions sur la zone Europe est très importante. On constante également la présence de couloirs aériens, notamment dans la partie Nord-Ouest de l'Europe en direction de l'Amérique du Nord ou encore dans la partie Sud-Ouest de l'Europe en direction de l'Amérique du Sud.

Tel qu'illustré par la partie b) de la figure 5, il est décidé que l'Europe ne doit pas être couverte (du fait par exemple de la densité élevée qui y est prévue et/ou du fait d'une couverture satisfaisante par des stations sol ADS-B 30), et une zone d'exclusion ZE est prévue pour l'Europe. Par conséquent, il n'est pas nécessaire de former des spots dans cette zone d'exclusion ZE.

La partie c) de la figure 5 représente schématiquement des exemples de spots de faisceaux pouvant être formés dans la zone de service ZS, à l'exclusion de la zone d'exclusion ZE, en adaptant la superficie et/ou la forme des spots de faisceaux à la distribution géographique des avions. Dans cet exemple, 10 (dix) spots de faisceaux sont formés, respectivement désignés par S1 à S10 et représentés en traits discontinus. Par souci de clarté de la partie c) de la figure 5, les avions présents dans la zone de service ZS, visibles sur la partie a), ne sont pas représentés sur la partie c) de la figure 5.

Tel qu'illustré par la partie c) de la figure 5, les spots S1-S10 sont de formes et superficies variées.

Par exemple, le spot S5 est sensiblement circulaire et présente la plus grande superficie, et couvre une partie à faible densité d'avions 20. Les spots S3, S4, S6, S8, S9 et S10 sont également de forme sensiblement circulaire, avec des superficies respectives moins grandes que celle du spot S5.

Les spots S2 et S7 sont positionnés sur les couloirs aériens, et lesdits couloirs aériens définissent des trajectoires privilégiées pour les avions 20. Dans l'exemple illustré, les spots S2 et S7 sont de forme oblongue suivant la trajectoire privilégiée des avions 20. Dans l'exemple illustré par la partie c) de la figure 5, chaque trajectoire privilégiée est desservie par un seul spot de forme oblongue suivant la trajectoire privilégiée considérée. Il est également possible, en particulier si la trajectoire privilégiée s'étend sur une portion importante de la zone de service ZS, de prévoir au moins deux spots de forme oblongue agencés dans le prolongement l'un de l'autre suivant ladite trajectoire privilégiée. Rien n'exclut cependant, d'autres exemples, de couvrir les trajectoires privilégiées des avions 20 de manière différente. Par exemple, il est possible de former des spots de faisceaux de forme oblongue, mais agencée transversalement à ladite trajectoire privilégiée des avions 20. Il est également possible, suivant d'autres exemples, de former des spots de forme sensiblement circulaire, agencés le long de la trajectoire privilégiée. De tels spots circulaires sont par exemple de faible superficie, compte tenu du fait que la densité d'avions dans un couloir aérien est généralement élevée.

Le spot S1 est également de forme oblongue, agencé de sorte à couvrir l'essentiel de la partie Nord de la zone de service ZS. Dans cette partie Nord de la zone de service ZS, la densité d'avions est faible, de sorte que la superficie du spot S1 est plus grande que, notamment, celles des spots S2 et S7.

Tel qu'indiqué précédemment, les durées d'activation des spots de faisceaux sont adaptées à la distribution des avions 20 dans la zone de service ZS considérée.

Dans l'exemple illustré par la partie c) de la figure 5, il est possible d'avoir une durée d'activation de 100% de la durée de la période d'observation pour les spots S2 et S7 uniquement, qui présentent la densité d'avions la plus élevée. Dans le cas de messages ADS-B de type 1090 ES, la durée de la période d'observation est supérieure à 1.2 secondes (s), et est par exemple comprise entre 5 s et 10 s. Pour les autres spots, il est possible de prévoir des durées d'activation plus faibles. Par exemple, il est possible de prévoir des durées d'activation égales à 50% de la durée de la période d'observation pour les spots S1, S4, S5, et S10, et égales à 25% de la durée de la période d'observation pour les spots S3, S6, S8 et S9. Du fait de ces différentes durées d'activation, il est possible d'activer certains spots de faisceaux successivement pendant la période d'observation, de sorte que seuls 5 (cinq) modules de traitement sont nécessaires pour traiter les signaux des 10 (dix) faisceaux formés, en appliquant par exemple la séquence d'activation suivante :
- un premier module de traitement et un second module de traitement traitent en parallèle les signaux des faisceaux des spots S2 et S7, pendant toute la durée de la période d'observation
- un troisième module de traitement traite successivement les signaux des faisceaux des spots S1 et S4, qui sont formés successivement au cours de la période d'observation,
- un quatrième module de traitement traite successivement les signaux des faisceaux des spots S5 et S10, qui sont formés successivement au cours de la période d'observation,
- un cinquième module de traitement traite successivement les signaux des faisceaux des spots S3, S6, S8 et S9, qui sont formés successivement au cours de la période d'observation.

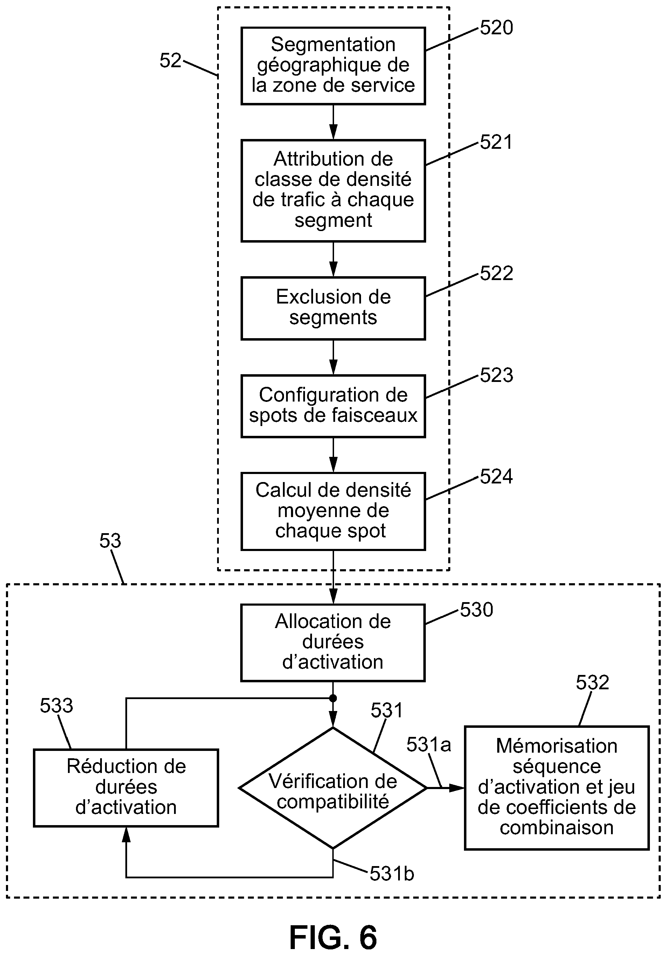

La figure 6 représente schématiquement les principales étapes d'un mode particulier de mise en œuvre de l'étape 52 de détermination d'un jeu de coefficients de combinaison pour la formation de faisceaux pour une position considérée du satellite 11 sur son orbite défilante, et de l'étape 53 de détermination des durées d'activation desdits faisceaux. Les étapes illustrées sur la figure 6 sont répétées pour chaque position considérée du satellite 11 sur son orbite défilante.

Tel qu'illustré par la figure 6, l'étape 52 comporte tout d'abord une étape 520 de segmentation géographique de la zone de service associée à la position considérée du satellite 11. L'étape 520 de segmentation géographique consiste par exemple à segmenter la zone de service selon une grille régulière de sorte à obtenir une pluralité de segments ayant tous sensiblement la même forme et sensiblement la même superficie. La superficie de chaque segment est par exemple égale ou inférieure à la superficie minimale que peut avoir un spot formé par le satellite 11.

L'étape 52 comporte ensuite par exemple une étape 521 d'attribution d'une classe de densité de trafic à chaque segment constituant la zone de service. Ainsi, plusieurs classes de densité de trafic sont préalablement définies (par exemple densité faible, moyenne et élevée, etc.), et chaque segment est rattaché à une classe de densité de trafic en fonction du nombre d'avions prévus, d'après la carte de densité d'avions, à l'intérieur du segment considéré.

L'étape 52 comporte ensuite par exemple une étape 522 d'exclusion des segments dans lesquels le nombre d'avions prévus est supérieur à un nombre maximal prédéterminé. Les segments ainsi exclus correspondent à une zone d'exclusion dans laquelle aucun spot de faisceau ne sera formé.

L'étape 52 comporte ensuite par exemple une étape 523 de configuration des spots de faisceaux par regroupement de segments adjacents appartenant à la même classe de densité de trafic ou à des classes de densité de trafic proches. Chaque regroupement de segments adjacents définit un spot à former, et le regroupement est de préférence réalisé sous contrainte d'une taille maximale prédéterminée de spot pour la classe de densité de trafic considérée. En effet, le nombre de segments adjacents pouvant être regroupés est avantageusement limité pour éviter d'avoir un nombre trop important d'avions susceptibles d'être présents dans le spot ainsi défini. Le nombre maximal de segments adjacents pouvant être regroupés pour une classe de densité de trafic élevée est plus petit que le nombre maximal de segments adjacents pouvant être regroupés pour une classe de densité de trafic faible, et un tel regroupement de segments permet d'assurer que le nombre d'avions à l'intérieur de chaque spot reste inférieur à une valeur seuil prédéterminée. La configuration des spots est par exemple réalisée de manière itérative afin d'optimiser les regroupements de segments, c'est-à-dire afin d'identifier des regroupements de segments permettant de minimiser le nombre de faisceaux à former pour la zone de service considérée. Le jeu de coefficients de combinaison permettant de former les spots de faisceaux ainsi définis sont par exemple calculés au cours de l'étape 523.

L'étape 52 comporte ensuite par exemple une étape 524 de calcul d'une densité moyenne d'avions dans chaque spot défini au cours de l'étape 523 de configuration de spots. Comme précédemment pour les segments, chaque spot est par exemple rattaché à une classe de densité de trafic en fonction de la densité moyenne calculée pour le spot considéré.

L'étape 53 comporte par exemple une étape 530 d'allocation des durées d'activation respectives des spots définis au cours de l'étape 523 de configuration de spots, en fonction des classes de densité de trafic attribuées auxdits spots. Les durées d'activation sont égales ou inférieures à la durée de la période d'observation. Il est par exemple possible de prévoir des durées d'activation de référence associées respectivement aux différentes classes de densité de trafic. Ainsi, la durée d'activation d'un spot est par exemple choisie égale à la durée d'activation de référence associée à la classe de densité de trafic attribué à ce spot. Par exemple, la durée d'activation de référence pour une classe de densité de trafic élevée peut être égale à 100% de la durée de la période d'observation. La durée d'activation de référence pour une classe de densité de trafic moyenne peut être égale à 50% de la durée de la période d'observation. La durée d'activation de référence pour une classe de densité de trafic faible peut être égale à 25% de la durée de la période d'observation, etc.

Une fois les durées d'activation respectives des différents spots allouées au cours de l'étape 530, l'étape 52 comporte par exemple une étape 531 de vérification de compatibilité avec les capacités de traitement du dispositif 40 de réception. En effet, les spots définis et leurs durées d'activation doivent préférentiellement pouvoir être traités par les différents modules de traitement pendant la durée de la période d'observation. En d'autres termes, il est vérifié au cours de l'étape 531 s'il existe une séquence d'activation successive et/ou simultanée des différents spots de faisceaux, vérifiant les durées d'activation allouées, permettant de traiter les signaux des faisceaux des spots définis pendant la durée de la période d'observation. Dans le cas où une telle séquence d'activation existe (référence 531a sur la figure 6), alors l'étape 52 comporte une étape 532 de mémorisation de la séquence d'activation et du jeu de coefficients de combinaison permettant de former les spots de faisceaux définis au cours de l'étape 523. Dans le cas où les spots définis et leurs durées d'activation respectives ne sont pas compatibles avec les capacités de traitement du dispositif 40 de réception (référence 531b sur la figure 6), alors l'étape 52 comporte par exemple une étape 533 de réduction de tout ou partie des durées d'activation respectives des différents spots, jusqu'à obtenir une séquence d'activation compatible avec les capacités de traitement du dispositif 40 de réception. Les réductions appliquées sont par exemple proportionnelles aux durées d'activation, et les coefficients proportionnels appliqués dépendent par exemple de la classe de densité de trafic attribuée à chaque spot. Par exemple, la réduction appliquée (par exemple 5% de réduction) à la durée d'activation d'un spot associé à une classe de densité de trafic faible peut être proportionnellement plus élevée à la réduction appliquée (par exemple 2% de réduction) à un spot associé à une classe de densité de trafic élevée.

Tel qu'indiqué ci-dessus, les étapes illustrées par la figure 6 sont répétées pour chaque position considérée du satellite 11 sur son orbite défilante. Les jeux de coefficients de combinaison ainsi calculés (et, le cas échéant, les séquences d'activation associées) sont ensuite incorporés dans le plan de mission qui est émis à destination du satellite 11. Le plan de mission est en outre configuré pour permettre au dispositif 40 de réception d'appliquer chaque jeu de coefficients de combinaison (et, le cas échéant, la séquence d'activation associée) lorsque le satellite 11 se trouve à la bonne position sur son orbite défilante. Par exemple, chaque jeu de coefficients de combinaison est associé, dans le plan de mission, à une information représentative de la position associée du satellite 11 sur son orbite défilante. Ainsi, lorsque le circuit 43 de traitement obtient une information représentative de la position courante du satellite 11 sur son orbite défilante, il peut extraire du plan de mission mémorisé le jeu de coefficients de combinaison associé à cette position, et l'utiliser pour former des spots adaptés à la distribution des avions dans la zone de service associée à cette position.

De manière plus générale, il est à noter que les modes de mise en œuvre et de réalisation considérés ci-dessus ont été décrits à titre d'exemples non limitatifs, et que d'autres variantes sont par conséquent envisageables.

### Références

[Yu2020] Sunquan Yu et al. : « Integrated antenna and receiver system with self-calibrating digital beamforming for space-based ADS-B », ACTA ASTRONAUTICA, PERGAMON PRESS, ELMSFORD, GB, Volume 170, pages 480-486, 5 février 2020

## Revendications

1. Dispositif (40) de réception de messages ADS-B pour satellite (11) en orbite défilante autour de la Terre, ledit dispositif (40) de réception comportant un réseau (41) de sources et un module (42) de formation de faisceaux adapté à former des faisceaux à l'intérieur d'un champ de vision dudit réseau (41) de sources, une empreinte au sol dudit champ de vision définissant une zone de service dudit dispositif de réception, des zones de service différentes étant associées à des positions respectives différentes du satellite (11) sur l'orbite défilante, une empreinte au sol d'un faisceau définissant un spot à l'intérieur de la zone de service, ledit module de formation de faisceaux étant configuré pour former chaque faisceau en combinant des signaux fournis par le réseau de sources en appliquant des coefficients de combinaison, ledit dispositif de réception comportant un circuit (43) de traitement configuré pour obtenir une information représentative d'une position du satellite (11) sur l'orbite défilante et pour modifier un jeu de coefficients de combinaison du module (42) de formation de faisceaux pour adapter la superficie et/ou la forme des spots des faisceaux formés à une distribution géographique des aéronefs à l'intérieur de la zone de service associée à la position dudit satellite sur l'orbite défilante,
le circuit (43) de traitement étant en outre configuré pour contrôler des durées d'activation respectives des spots des faisceaux formés à l'intérieur de la zone de service associée à la position du satellite (11) en fonction de la distribution géographique des aéronefs à l'intérieur de ladite zone de service.

2. Dispositif (40) de réception selon la revendication 1, dans lequel le jeu de coefficients de combinaison est déterminé pour former des spots de superficie moins importante dans des parties à forte densité d'aéronefs de la zone de service que dans des parties à faible densité d'aéronefs de la zone de service.

3. Dispositif (40) de réception selon l'une quelconque des revendications 1 à 2, dans lequel le jeu de coefficients de combinaison est modifié pour contrôler la superficie et/ou la forme de chaque spot de faisceau formé à l'intérieur de la zone de service associée à la position du satellite (11) pour avoir un nombre d'aéronefs à l'intérieur de chaque spot de faisceau inférieur à une valeur seuil prédéterminée.

4. Dispositif (40) de réception selon l'une quelconque des revendications 1 à 3, dans lequel le jeu de coefficients est modifié pour adapter la forme d'au moins un spot de faisceau formé à une trajectoire privilégiée des aéronefs à l'intérieur de la zone de service associée à la position du satellite (11).

5. Dispositif (40) de réception selon la revendication 4, dans lequel la forme de l'au moins un spot de faisceau est oblongue suivant la trajectoire privilégiée des aéronefs ou oblongue transversalement à ladite trajectoire privilégiée des aéronefs.

6. Dispositif (40) de réception selon l'une quelconque des revendications 1 à 5, dans lequel le jeu de coefficients de combinaison est configuré pour ne pas former de spots à l'intérieur d'une zone d'exclusion prédéterminée pour la zone de service associée à la position du satellite (11).

7. Dispositif (40) de réception selon l'une quelconque des revendications 1 à 6, comportant un module (44) de réception d'un plan de mission, ledit plan de mission comportant une pluralité de jeux de coefficients de combinaison pour le module (42) de formation de faisceaux, chaque jeu de coefficients de combinaison étant associé à une position respective du satellite (11) sur l'orbite défilante et permettant de former des spots de faisceaux dont la superficie et/ou la forme est adaptée à la distribution géographique des aéronefs à l'intérieur de la zone de service associée à ladite position respective du satellite (11) sur ladite orbite défilante.

8. Procédé (50) de contrôle, par une station terrestre (12), d'un dispositif (40) de réception de messages ADS-B embarqué dans un satellite (11) en orbite défilante autour de la Terre, ledit dispositif (40) de réception comportant un réseau (41) de sources et un module (42) de formation de faisceaux adapté à former des faisceaux à l'intérieur d'un champ de vision dudit réseau (41) de sources, une empreinte au sol dudit champ de vision définissant une zone de service dudit dispositif de réception, des zones de service différentes étant associées à des positions respectives différentes du satellite (11) sur l'orbite défilante, une empreinte au sol d'un faisceau définissant un spot à l'intérieur de la zone de service, ledit module de formation de faisceaux étant configuré pour former chaque faisceau en combinant des signaux fournis par le réseau de sources en appliquant des coefficients de combinaison, ledit procédé (50) de contrôle comportant, pour chacune parmi une pluralité de positions prédéterminées du satellite (11) sur ladite orbite défilante, des étapes de :
- (51) obtention d'une carte de densité d'aéronefs représentative de la distribution géographique des aéronefs à l'intérieur de la zone de service associée à la position considérée du satellite (11) sur l'orbite défilante,
- (52) détermination d'un jeu de coefficients de combinaison en fonction de la carte de densité d'aéronefs, le jeu de coefficients de combinaison étant déterminé pour adapter la superficie et/ou la forme des spots de faisceaux formés à la distribution géographique des aéronefs à l'intérieur de la zone de service associée à la position considérée,
- (53) détermination d'une durée d'activation de chaque spot de faisceau en fonction de la distribution géographique des aéronefs à l'intérieur de la zone de service associée à la position considérée,
ledit procédé (50) de contrôle comportant en outre une étape (54) d'émission, à destination du dispositif (40) de réception embarqué dans le satellite (11), d'un plan de mission regroupant les jeux de coefficients de combinaison associés respectivement à la pluralité de positions du satellite (11) sur l'orbite défilante.

9. Procédé (50) de contrôle selon la revendication 8, dans lequel chaque jeu de coefficients de combinaison permet de former une pluralité de faisceaux simultanément et/ou successivement au cours d'une période d'observation de durée prédéterminée de la zone de service associée à la position associée audit jeu de coefficients de combinaison.

10. Procédé (50) de contrôle selon l'une quelconque des revendications 8 à 9, dans lequel les jeux de coefficients de combinaison sont déterminés pour former des spots de superficie moins importante dans des parties à forte densité d'aéronefs de la zone de service considérée que dans des parties à faible densité d'aéronefs de la zone de service considérée.

11. Procédé (50) de contrôle selon l'une quelconque des revendications 8 à 10, dans lequel les jeux de coefficients de combinaison sont déterminés pour contrôler la superficie et/ou la forme de chaque spot de faisceau pour avoir un nombre d'aéronefs à l'intérieur de chaque spot de faisceau inférieur à une valeur seuil prédéterminée.

12. Procédé (50) de contrôle selon l'une quelconque des revendications 8 à 11, dans lequel au moins un jeu de coefficients de combinaison est déterminé pour adapter la forme d'au moins un spot de faisceau à une trajectoire privilégiée des aéronefs à l'intérieur de la zone de service associée à la position considérée.

13. Procédé (50) de contrôle selon la revendication 12, dans lequel la forme de l'au moins un spot de faisceau est oblongue suivant la trajectoire privilégiée des aéronefs ou oblongue transversalement à ladite trajectoire privilégiée des aéronefs.

14. Procédé (50) de contrôle selon l'une quelconque des revendications 8 à 13, dans lequel au moins un jeu de coefficients de combinaison est configuré pour ne pas former de spots à l'intérieur d'une zone d'exclusion prédéterminée à l'intérieur de la zone de service associée à la position considérée.

15. Station terrestre (12) comportant des moyens configurés pour mettre en œuvre un procédé (50) de contrôle selon l'une quelconque des revendications 8 à 14.

16. Système (10) de réception de messages ADS-B émis par des aéronefs (20), ledit système de réception comportant au moins une station terrestre (12) selon la revendication 15 et au moins un satellite (11) en orbite défilante autour de la Terre, ledit au moins un satellite (11) embarquant un dispositif (40) de réception de messages ADS-B selon la revendication 7.

## Patentansprüche

1. ADS-B-Nachrichten-Empfangsvorrichtung (40) für einen Satelliten (11), der sich in einer Erdumlaufbahn befindet, wobei die Empfangsvorrichtung (40) ein Quellennetz (41) und ein Strahlenbündelformungsmodul (42) aufweist, das angepasst ist, Strahlenbündel in einem Sichtfeld des Quellennetzes (41) zu formen, wobei ein Bodenabdruck des Sichtfelds eine Dienstzone der Empfangsvorrichtung definiert, unterschiedliche Dienstzonen mit jeweiligen unterschiedlichen Positionen des Satelliten (11) auf der Umlaufbahn assoziiert sind, ein Bodenabdruck eines Strahlenbündels einen Fleck innerhalb der Dienstzone definiert, das Strahlenbündelformungsmodul konfiguriert ist, jedes Strahlenbündel durch Kombinieren von Signalen, die von dem Quellennetz bereitgestellt werden, durch Anwenden von Kombinationskoeffizienten zu formen, wobei die Empfangsvorrichtung eine Verarbeitungsschaltung (43) aufweist, die konfiguriert ist, um eine Information zu empfangen, die eine Position des Satelliten (11) auf der Umlaufbahn repräsentiert, und um einen Satz von Kombinationskoeffizienten des Strahlenbündelformungsmoduls (42) zu modifizieren, um die Flächengröße und/oder die Form der gebildeten Strahlenbündelflecke an eine geographische Verteilung von Luftfahrzeugen innerhalb der Dienstzone, die mit der Position des Satelliten auf der Umlaufbahn assoziiert ist, anzupassen,
wobei die Verarbeitungsschaltung (43) ferner konfiguriert ist, um jeweilige Aktivierungsdauern der Strahlenbündelflecke, die innerhalb der mit der Position des Satelliten (11) assoziierten Dienstzone gebildet werden, als Funktion der geographischen Verteilung von Luftfahrzeugen innerhalb der Dienstzone zu steuern.

2. Empfangsvorrichtung (40) nach Anspruch 1, in welcher der Kombinationskoeffizienten-Satz bestimmt wird, um in Teilen der Dienstzone mit großer Luftfahrzeugdichte Flecke geringerer Flächengröße als in Teilen der Dienstzone mit kleiner Luftfahrzeugdichte zu bilden.

3. Empfangsvorrichtung (40) nach einem der Ansprüche 1 bis 2, in welcher der Kombinationskoeffizienten-Satz modifiziert wird, um die Flächengröße und/oder die Form jedes Strahlenbündelflecks, der innerhalb der mit der Position des Satelliten (11) assoziierten Dienstzone gebildet wird, zu steuern, um in jedem Strahlenbündelfleck eine Anzahl von Luftfahrzeugen zu haben, die kleiner als ein vorgegebener Schwellenwert ist.

4. Empfangsvorrichtung (40) nach einem der Ansprüche 1 bis 3, in welcher der Koeffizienten-Satz modifiziert wird, um die Form mindestens eines gebildeten Strahlenbündelflecks an eine bevorrechtigte Flugbahn der Luftfahrzeuge innerhalb der mit der Position des Satelliten (11) assoziierten Dienstzone anzupassen.

5. Empfangsvorrichtung (40) nach Anspruch 4, in welcher die Form des mindestens einen Strahlenbündelflecks länglich entlang der bevorrechtigten Flugbahn der Luftfahrzeuge oder länglich transversal zu der bevorrechtigten Flugbahn der Luftfahrzeuge ist.

6. Empfangsvorrichtung (40) nach einem der Ansprüche 1 bis 5, in welcher der Kombinationskoeffizienten-Satz konfiguriert ist, um in einer vorgegebenen Ausschließungszone innerhalb der mit der Position des Satelliten (11) assoziierten Dienstzone keine Flecke zu bilden.

7. Empfangsvorrichtung (40) nach einem der Ansprüche 1 bis 6, aufweisend ein Modul (44) zum Empfangen eines Auftragsplans, wobei der Auftragsplan mehrere Kombinationskoeffizienten-Sätze für das Strahlenbündelformungsmodul (42) aufweist, jeder Kombinationskoeffizienten-Satz mit einer jeweiligen Position des Satelliten (11) auf der Umlaufbahn assoziiert ist und erlaubt, Strahlenbündelflecke zu bilden, deren Flächengröße und/oder Form an die geographische Verteilung der Luftfahrzeuge innerhalb der Dienstzone, die mit der jeweiligen Position des Satelliten (11) auf der Umlaufbahn assoziiert ist, angepasst ist.

8. Verfahren (50) zur Steuerung einer ADS-B-Nachrichten-Empfangsvorrichtung (40), die sich an Bord eines Satelliten (11) in einer Erdumlaufbahn befindet, durch eine Bodenstation (12), wobei die Empfangsvorrichtung (40) ein Quellennetz (41) und ein Strahlenbündelformungsmodul (42) aufweist, das angepasst ist, Strahlenbündel in einem Sichtfeld des Quellennetzes (41) zu formen, wobei ein Bodenabdruck des Sichtfelds eine Dienstzone der Empfangsvorrichtung definiert, unterschiedliche Dienstzonen mit jeweiligen unterschiedlichen Positionen des Satelliten (11) auf der Umlaufbahn assoziiert sind, ein Bodenabdruck eines Strahlenbündels einen Fleck innerhalb der Dienstzone definiert, das Strahlenbündelformungsmodul konfiguriert ist, jedes Strahlenbündel durch Kombinieren von Signalen, die von dem Quellennetz bereitgestellt werden, durch Anwenden von Kombinationskoeffizienten zu formen, wobei für jede von mehreren vorgegebenen Positionen des Satelliten (11) auf der Umlaufbahn das Steuerverfahren (50) die folgenden Schritte aufweist:
- (51) Abrufen einer Luftfahrzeugdichte-Karte, die eine geographische Verteilung der Luftfahrzeuge innerhalb der Dienstzone, die mit der betrachteten Position des Satelliten (11) auf der Umlaufbahn assoziiert ist, repräsentiert,
- (52) Bestimmen eines Kombinationskoeffizienten-Satzes als Funktion der Luftfahrzeugdichte-Karte, wobei der Kombinationskoeffizienten-Satz bestimmt wird, um die Flächengröße und/oder die Form der gebildeten Strahlenbündelflecke an die geographische Verteilung der Luftfahrzeuge innerhalb der Dienstzone, die mit der betrachteten Position assoziiert ist, anzupassen,
- (53) Bestimmen einer Aktivierungsdauer jedes Strahlenbündelflecks als Funktion der geographischen Verteilung der Luftfahrzeuge innerhalb der Dienstzone, die mit der betrachteten Position assoziiert ist,
wobei das Steuerverfahren (50) ferner einen Schritt (54) zum Senden eines Auftragsplans zu der Empfangsvorrichtung (40) an Bord des Satelliten (11) aufweist, der die Kombinationskoeffizienten-Sätze, die jeweils mit den mehreren Positionen des Satelliten (1) auf der Umlaufbahn assoziiert sind, umgruppiert.

9. Steuerverfahren (50) nach Anspruch 8, in welchem jeder Kombinationskoeffizienten-Satz erlaubt, während eines Zeitraums vorgegebener Dauer einer Beobachtung der Dienstzone, die mit der Position assoziiert ist, die mit dem Kombinationskoeffizienten-Satz assoziiert ist, mehrere Strahlenbündel gleichzeitig oder nacheinander zu formen.

10. Steuerverfahren (50) nach einem der Ansprüche 8 bis 9, in welchem die Kombinationskoeffizienten-Sätze bestimmt werden, um in Teilen der betrachteten Dienstzone mit großer Luftfahrzeugdichte Flecke geringerer Flächengröße als in Teilen der betrachteten Dienstzone mit kleiner Luftfahrzeugdichte zu bilden.

11. Steuerverfahren (50) nach einem der Ansprüche 8 bis 10, in welchem die Kombinationskoeffizienten-Sätze bestimmt werden, um die Flächengröße und/oder die Form jedes Strahlenbündelflecks zu steuern, um in jedem Strahlenbündelfleck eine Anzahl von Luftfahrzeugen zu haben, die kleiner als ein vorgegebener Schwellenwert ist.

12. Steuerverfahren (50) nach einem der Ansprüche 8 bis 11, in welchem mindestens ein Kombinationskoeffizienten-Satz bestimmt wird, um die Form mindestens eines Strahlenbündelflecks an eine bevorrechtigte Flugbahn der Luftfahrzeuge innerhalb der mit der betrachteten Position assoziierten Dienstzone anzupassen.

13. Steuerverfahren (50) nach Anspruch 12, in welchem die Form des mindestens einen Strahlenbündelflecks länglich entlang der bevorrechtigten Flugbahn der Luftfahrzeuge oder länglich transversal zu der bevorrechtigten Flugbahn der Luftfahrzeuge ist.

14. Steuerverfahren (50) nach einem der Ansprüche 8 bis 13, in welchem mindestens ein Kombinationskoeffizienten-Satz konfiguriert ist, um in einer vorgegebenen Ausschließungszone innerhalb der mit der betrachteten Position assoziierten Dienstzone keine Flecke zu bilden.

15. Bodenstation (12) aufweisend Einrichtungen zum Durchführen eines Steuerverfahrens (50) nach einem der Ansprüche 8 bis 14.

16. Empfangssystem (10) zum Empfangen von ADS-B-Nachrichten, die von Luftfahrzeugen ausgesendet werden, wobei das Empfangssystem mindestens eine Bodenstation (12) nach Anspruch 15 und mindestens einen Satelliten (11) in einer Erdumlaufbahn aufweist, wobei der mindestens eine Satellit (11) eine ADS-B-Nachrichten-Empfangsvorrichtung (40) nach Anspruch 7 an Bord hat.

## Claims

1. Device (40) for the reception of ADS-B messages for a satellite (11) in non-geostationary orbit around the Earth, said reception device (40) comprising an array (41) of sources and a beamforming module (42) capable of forming beams within a field of view of said array (41) of sources, a ground footprint of said field of view defining a service area of said reception device, different service areas being associated with different respective positions of the satellite (11) on the non-geostationary orbit, a ground footprint of a beam defining a spot within the service area, said beamforming module being configured to form each beam by combining signals provided by the array of sources by applying combination coefficients, said reception device comprising a processing circuit (43) configured to obtain information representative of a position of the satellite (11) on the non-geostationary orbit and to modify a set of combination coefficients of the beamforming module (42) so as to adapt the surface area and/or the shape of the spots of the formed beams to a geographical distribution of the aircrafts within the service area associated with the position of said satellite on the non-geostationary orbit,
the processing circuit (43) being further configured to control respective activation durations of the spots of the beams formed within the service area associated with the position of the satellite (11) according to the geographical distribution of aircrafts within said service area.

2. Reception device (40) according to claim 1, wherein the set of combination coefficients is determined so as to form spots of smaller surface area in portions of high aircraft density of the service area than in portions of low aircraft density of the service area.

3. Reception device (40) according to any one of claims 1 to 2, wherein the set of combination coefficients is modified so as to control the surface area and/or the shape of each beam spot formed within the service area associated with the position of the satellite (11) in order to have a number of aircrafts, within each beam spot, that is lower than a predetermined threshold value.

4. Reception device (40) according to any one of claims 1 to 3, wherein the set of coefficients is modified so as to adapt the shape of at least one formed beam spot to a preferred trajectory of the aircrafts within the service area associated with the position of the satellite (11).

5. Reception device (40) according to claim 4, wherein the shape of the at least one beam spot is oblong along the preferred trajectory of aircrafts or oblong transversely to said preferred trajectory of aircrafts.

6. Reception device (40) according to any one of claims 1 to 5, wherein the set of combination coefficients is configured so as not to form spots within a predetermined exclusion region for the service area associated with the position of the satellite (11).

7. Reception device (40) according to any one of claims 1 to 6, comprising a module (44) for the reception of a mission plan, said mission plan comprising a plurality of sets of combination coefficients for the beamforming module (42), each set of combination coefficients being associated with a respective position of the satellite (11) on the non-geostationary orbit and making it possible to form beam spots whose surface area and/or shape is adapted to the geographical distribution of aircrafts within the service area associated with said respective position of the satellite (11) on said non-geostationary orbit.

8. Method (50) for controlling, by a ground station (12), a device (40) for the reception of ADS-B messages which is carried onboard a satellite (11) in non-geostationary orbit around the Earth, said reception device (40) comprising an array (41) of sources and a beamforming module (42) capable of forming beams within a field of view of said array (41) of sources, a ground footprint of said field of view defining a service area of said reception device, different service areas being associated with different respective positions of the satellite (11) on the non-geostationary orbit, a ground footprint of a beam defining a spot within the service area, said beamforming module being configured to form each beam by combining signals supplied by the array of sources by applying combination coefficients, said control method (50) comprising, for each among a plurality of predetermined positions of the satellite (11) in said non-geostationary orbit, the steps of:
- (51) obtaining an aircraft density map representative of the geographical distribution of aircrafts within the service area associated with the considered position of the satellite (11) on the non-geostationary orbit,
- (52) determining a set of combination coefficients on the basis of the aircraft density map, the set of combination coefficients being determined so as to adapt the surface area and/or the shape of the formed beam spots to the geographical distribution of aircrafts within the service area associated with the position considered,
- (53) determining an activation duration of each beam spot on the basis of the geographical distribution of aircrafts within the service area associated with the position considered,
said control method (50) further comprising a step (54) of transmitting, to the reception device (40) onboard the satellite (11), a mission plan which groups together the sets of combination coefficients respectively associated with the plurality of positions of the satellite (11) on the non-geostationary orbit.

9. Control method (50) according to claim 8, wherein each set of combination coefficients makes it possible to form a plurality of beams simultaneously and/or successively during an observation period of predetermined duration for observing the service area associated with the position associated with said set of combination coefficients.

10. Control method (50) according to any one of claims 8 to 9, wherein the sets of combination coefficients are determined so as to form spots of smaller surface area in portions of high aircraft density of the service area considered than in portions of low aircraft density of the service area considered.

11. Control method (50) according to any one of claims 8 to 10, wherein the sets of combination coefficients are determined so as to control the surface area and/or the shape of each beam spot in order to have a number of aircrafts, within each beam spot, that is below a predetermined threshold value.

12. Control method (50) according to any one of claims 8 to 11, wherein at least one set of combination coefficients is determined so as to adapt the shape of at least one beam spot to a preferred trajectory of aircrafts within the service area associated with the position considered.

13. Control method (50) according to claim 12, wherein the shape of the at least one beam spot is oblong along the preferred trajectory of aircrafts or is oblong transversely to said preferred trajectory of aircrafts.

14. Control method (50) according to any one of claims 8 to 13, wherein at least one set of combination coefficients is configured so as not to form spots within a predetermined exclusion region within the service area associated with the position considered.

15. Ground station (12) comprising means configured for implementing a control method (50) according to any one of claims 8 to 14.

16. System (10) for the reception of ADS-B messages transmitted by aircrafts (20), said reception system comprising at least one ground station (12) according to claim 15 and at least one satellite (11) in non-geostationary orbit around the Earth, said at least one satellite (11) carrying onboard a device (40) for the reception of ADS-B messages according to claim 7.
